Europäisches Patentamt

European Patent Office

Office européen des brevets

(19)

(11) EP 0 696 734 B1

(12) FASCICULE DE BREVET EUROPEEN

(45) Date de publication et mention
de la délivrance du brevet:
**21.11.2001 Bulletin 2001/47**

(51) Int Cl.⁷: **G01N 29/04**

(21) Numéro de dépôt: **95401839.6**

(22) Date de dépôt: **04.08.1995**

(54) **Procédé automatisé de contrôle au son de pièces complexes, pour la détection de défauts peu profonds**

Automatische Überwachungsvorrichtung für komplexe Körper mit Schall zum Feststellen von Fehlern

Method for automatic controlling of complex pieces with sound, for detecting shallow flaws

(84) Etats contractants désignés:
**DE GB IT**

(30) Priorité: **08.08.1994 FR 9409808**

(43) Date de publication de la demande:
**14.02.1996 Bulletin 1996/07**

(73) Titulaire: **AEROSPATIALE Société Nationale
Industrielle
75781 Paris Cédex 16 (FR)**

(72) Inventeurs:
 • **Baudrillard, Gilles
  F-92150 Suresnes (FR)**
 • **Bouju, Christophe Pierre
  F-75016 Paris (FR)**

(74) Mandataire: **Dubois-Chabert, Guy et al
BREVALEX
3, rue du Docteur Lanceraux
75008 Paris (FR)**

(56) Documents cités:
 **WO-A-87/07378          WO-A-92/12423
 DE-A- 4 207 728**

 • **NEURAL NETWORKS FROM MODELS TO
  APPLICATIONS., 1988 PARIS, FRANCE, pages
  592-601, XP 000088404 C.G.WINDSOR 'The
  classification of defects from ultrasonic
  measurements.'**
 • **ULTRASONICS, vol. 32, no. 2, Mars 1994
  OXFORD, USA, pages 91-98, XP 000435872
  T.R.DAMARLA ET AL. 'A learning algorithm for
  a CMAC-based system and its application for
  classification of ultrasonic signals.'**

## Description

L'invention concerne un procédé permettant de contrôler des pièces complexes, de façon automatisée, en utilisant la réponse acoustique engendrée par des chocs successifs appliqués selon des impacts répartis sur une surface à contrôler de la pièce.

Ce procédé peut être utilisé pour effectuer un contrôle non destructif sur des pièces en matériau composite, métalliques, etc. de formes et de dimensions quelconques, dans la mesure où ces pièces comportent une structure complexe et, par exemple, un revêtement superficiel fixé sur un support par collage. L'utilisation du procédé selon l'invention est particulièrement avantageuse dans le cas de pièces de structures très complexes telles que des pales de giravions. Elle permet de détecter des défauts peu profonds (jusqu'à environ 4 mm) tels que des décollements, des délaminages ou des défauts d'homogénéité dans les structures.

Les techniques de contrôle non destructif sont nombreuses. Ainsi, on citera de façon non limitative les contrôles par ultrasons, l'holographie, la radioscopie, la radiographie, le contrôle dimensionnel, etc..

Lorsque les structures des pièces sont très complexes et notamment lorsqu'on y trouve des matériaux différents assemblés par exemple par collage dans le sens de l'épaisseur, on peut être amené à utiliser conjointement plusieurs techniques de contrôle complémentaires. Cette observation concerne en particulier les pièces essentielles pour la sécurité, telles que les pales de giravions, dans lesquelles la présence d'un défaut doit impérativement être détectée.

Dans le cas du contrôle des structures très complexes telles que les pales de giravions, les différentes techniques de contrôle non destructif utilisées habituellement incluent un contrôle au son (en anglais : "tapping"). Ce contrôle est destiné à détecter d'éventuels défauts peu profonds (jusqu'à environ 4 mm) tels que des décollements de revêtement superficiel, des délaminages de couches superficielles ou la présence de zones superficielles non homogènes. Il consiste à appliquer sur la pièce des chocs successifs dont les impacts sont répartis sur la surface à contrôler. Le son produit par ces chocs, c'est-à-dire la résonance acoustique qu'ils induisent dans la pièce, permet au contrôleur de déceler d'éventuels défauts et d'en établir la cartographie sur la pièce.

Il n'existe pas actuellement de machine de contrôle automatisée susceptible d'effectuer le contrôle au son ou un contrôle capable de détecter le même type de défauts sur des pièces de structures comparables. En particulier, s'il existe un appareil permettant d'appliquer des chocs successifs sur une pièce, comme l'illustre le document FR-A-2 062 069, l'établissement d'un diagnostic reste totalement à la charge du contrôleur.

La fiabilité du contrôle au son repose donc essentiellement sur la qualité de la formation du contrôleur. Elle est donc indissociable du facteur humain et peut conduire à des méthodes ou à des avis légèrement différents d'un contrôleur à l'autre.

Par ailleurs, le contrôle complet d'une pièce est une opération longue et coûteuse.

Le document WO-A-92 12423 se rapporte à une installation de contrôle au son de matériaux hétérogènes, tels que du béton. Cette installation comprend un transducteur qui recueille le signal sonore engendré par l'impact d'une bille sur la surface du béton. Le signal électrique émis par le transducteur est transmis à un ordinateur, qui compare le spectre correspondant à des valeurs de référence, préalablement mises en mémoire, en utilisant un réseau de neurones.

L'invention a précisément pour objet un procédé permettant d'effectuer le contrôle au son de pièces complexes d'une manière automatisée, afin de délivrer un diagnostic uniformisé, de façon sûre, rapide et moins coûteuse que le contrôle actuel et en permettant un stockage et une présentation améliorés des données et des résultats.

Conformément à l'invention, ce résultat est obtenu au moyen d'un procédé de contrôle au son de pièces complexes, selon lequel on soumet la pièce à des chocs successifs selon des impacts répartis sur une surface à contrôler de la pièce, on recueille des signaux sonores engendrés par chaque choc et on déduit de la réponse acoustique engendrée par ces chocs un diagnostic relatif à la présence de défauts peu profonds, caractérisé par le fait qu'on compare entre eux au moins deux signaux sonores successifs émis par la pièce à contrôler, pour en déduire de façon automatisée un diagnostic de défaut lorsqu'une différence notable est détectée entre ces signaux sonores successifs.

L'établissement d'un diagnostic par comparaison d'au moins deux signaux sonores successifs recueillis lors du contrôle d'une même pièce permet d'effectuer le contrôle de façon automatisée en un temps relativement court. En effet, le contrôle d'une pièce est indépendant des caractéristiques spécifiques de cette pièce et sa durée n'est pratiquement déterminée que par les contraintes mécaniques liées au déplacement de l'outil servant à appliquer les chocs et par les contraintes acoustiques liées au temps d'amortissement des signaux sonores induits par chacun des chocs.

De préférence, on applique sur la pièce des chocs successifs calibrés, à une fréquence régulée et de façon automatisée, selon des impacts régulièrement répartis sur la surface à contrôler.

Selon le cas, les signaux sonores que l'on compare peuvent être soit des signaux consécutifs, engendrés par des chocs d'impacts adjacents, soit des signaux non consécutifs, engendrés par des chocs d'impacts séparés par au moins un impact intermédiaire.

Pour mettre en oeuvre le procédé selon l'invention, les méthodes classiques de traitement des signaux, utilisant soit une comparaison avec une base de signaux de référence, soit un système expert ont été écartées. En effet, une base de signaux sonores de référence est très difficile à constituer, compte tenu de la grande variété de ces signaux. Par ailleurs, le caractère flou des signaux sonores, la présence de bruits parasites et la difficulté à expliquer ce qu'entend l'oreille ont aussi conduit à écarter les méthodes à base de systèmes experts.

C'est pourquoi, dans une forme de réalisation préférentielle de l'invention, on compare entre eux les signaux sonores successifs et on en déduit un diagnostic de façon automatique, à l'aide d'un réseau de neurones.

De tels réseaux neuronaux sont décrits plus précisément dans un manuel intitulé "Parallel Distributed Processing" de Rumelhart et al (notamment pages 322-328 ; MIT Press 1986).

Chaque neurone réalise une somme pondérée S de ses entrées Ei et lui applique une fonction de sortie f non linéaire en utilisant des coefficients de pondération Wi, appelés poids synaptiques. On a la relation : $S=f(WiEi)$.

Ces neurones sont regroupés sous la forme d'un réseau qui est un ensemble de neurones répartis sur plusieurs couches, les sorties de chaque couche constituant les entrées de la couche suivante. La première couche du réseau est appelée couche d'entrée, la dernière couche, couche de sortie, et les couches intermédiaires, couches cachées.

La résolution d'un problème à l'aide d'un réseau neuronal se décompose en trois phases chronologiques :

**Une phase d'apprentissage :** après avoir fixé l'architecture du réseau, cette phase est réalisée à l'aide d'un jeu d'exemples représentatifs du problème à résoudre. Chaque exemple est constitué des entrées relatives à un cas du problème et de la ou des sorties correspondantes (dans l'invention, les entrées sont des valeurs représentatives de deux signaux sonores recueillis par un microphone placé devant une pièce soumise à des chocs et une sortie unique indique la présence ou l'absence de défauts). L'apprentissage consiste à déterminer les valeurs des poids synaptiques telles que, pour chaque exemple, le réseau fournisse une réponse proche de la ou des sorties attendues. L'algorithme d'apprentissage utilisé est un algorithme à rétropropagation de gradient tel que décrit dans le manuel cité plus haut (rétropropagation du gradient de l'erreur entre la sortie calculée et la sortie attendue). On espère ensuite que sur des cas nouveaux, le réseau fournira une réponse appropriée (capacité de généralisation).

**Une phase de validation :** au cours de cette phase, on évalue la réponse du réseau sur un autre jeu d'exemples représentatifs du problème à résoudre, dont les sorties sont également connues. Les exemples de cet autre jeu sont différents de ceux qui composent le jeu utilisé pour l'apprentissage.

**Une phase d'exploitation :** au cours de cette phase, les poids synaptiques déterminés au cours de la phase d'apprentissage, sont utilisés pour émettre un diagnostic (les valeurs de sortie du réseau sont calculées à partir des valeurs d'entrée, en fonction des poids synaptiques du réseau).

Avant de comparer les signaux sonores successifs à l'aide d'un réseau de neurones, on effectue avantageusement un prétraitement sur chacun des signaux sonores, pour dériver de ce dernier q valeurs représentatives, q étant un entier positif, et on utilise les q valeurs représentatives d'au moins deux signaux sonores successifs comme grandeurs d'entrée du réseau de neurones.

Dans la forme de réalisation préférentielle de l'invention, chacun des signaux sonores consistant en une suite de $m$ points déterminés chacun par un instant $t_i$ et par une amplitude de signal $y_i$, le prétraitement comprend une étape de sélection, parmi la suite de $m$ points, de $p$ points représentatifs, et une étape de lissage, au cours de laquelle les q valeurs représentatives sont déduites des $p$ points représentatifs, $m$ et $p$ étant des entiers tels que $m > p > q$.

Dans ce cas, l'étape de sélection consiste à éliminer les points de la suite de $m$ points qui précèdent l'apparition d'un premier pic du signal sonore, et à ne conserver qu'un nombre $p$ déterminé de points de la suite de $m$ points, à partir de ce premier pic.

Par ailleurs, l'étape de lissage consiste à transformer les instants $t_i$ de chacun des $p$ points représentatifs en variables $\xi_i$ telles que $\xi_i = (2 * t_i - \Delta t)/\Delta t$, où $\Delta t$ représente l'intervalle des variations des instants $t_i$, puis à déterminer, par la méthode des moindres carrés, les valeurs des paramètres $a_n$ pour lesquelles l'expression

$$S = \sum_i \{y_i - \sum_n a_n \, Tc_n \, (\xi_i)\}^2$$

est minimale, avec $\underline{n}$ variant de O à N, $Tc_n (\xi_i)$ étant le polynôme de Tchebychev de degré N, ces valeurs des paramètres $a_n$ étant les q valeurs représentatives recherchées.

Toujours selon la forme de réalisation préférentielle de l'invention, on utilise un réseau de neurones à quatre couches. Ce réseau comporte une couche d'entrée à x * q neurones, x étant le nombre de signaux sonores successifs que l'on compare, aux moins deux couches cachées et une couche de sortie à un seul neurone.

Dans une architecture particulière :

-   la première couche cachée comprend un nombre pair de neurones, égal à la moitié du nombre de neurones de la couche d'entrée, les neurones de la première couche cachée étant réparties en nombre égal dans un premier et un deuxième groupes de neurones ;

- tous les neurones du premier groupe sont connectés à tous les neurones de x groupes de neurones de la couche d'entrée recevant chacun une première moitié des q valeurs représentatives de l'un des signaux sonores comparés ;
- tous les neurones du deuxième groupe sont connectés à tous les neurones de x groupes de neurones de la couche d'entrée recevant chacun une deuxième moitié des q valeurs représentatives de l'un des signaux sonores comparés.

Par ailleurs :

- la deuxième couche cachée comprend un nombre de neurones supérieur à un et inférieur à la moitié du nombre de neurones de la première couche cachée ;
- tous les neurones de la deuxième couche cachée sont connectés à tous les neurones de la première couche cachée.

On décrira à présent, à titre d'exemple non limitatif, une forme de réalisation préférentielle de l'invention en se référant aux dessins annexés, dans lesquels :

- la figure 1 illustre très schématiquement un appareil automatisé de contrôle au son mettant en oeuvre le procédé de l'invention ;
- la figure 2 est une courbe représentant un signal sonore brut détecté par l'appareil de la figure 1, après l'application d'un choc sur la pièce ;
- la figure 3 est un schéma synaptique représentant les différentes étapes du prétraitement effectué sur chacun des signaux sonores recueillis lors de la mise en oeuvre de l'appareil de la figure 1 ;
- la figure 4 est une courbe comparable à la figure 2, représentant un signal sonore, après une première étape, dite de sélection, du prétraitement ;
- la figure 5 est un schéma représentant plus en détails la fin du pré-traitement et un exemple d'architecture d'un réseau de neurones servant à comparer les valeurs représentatives de deux signaux sonores successifs, issus du prétraitement, et à établir un diagnostic de défaut ; et
- les figures 6A et 6B sont des figures explicatives d'éléments représentés à la figure 5.

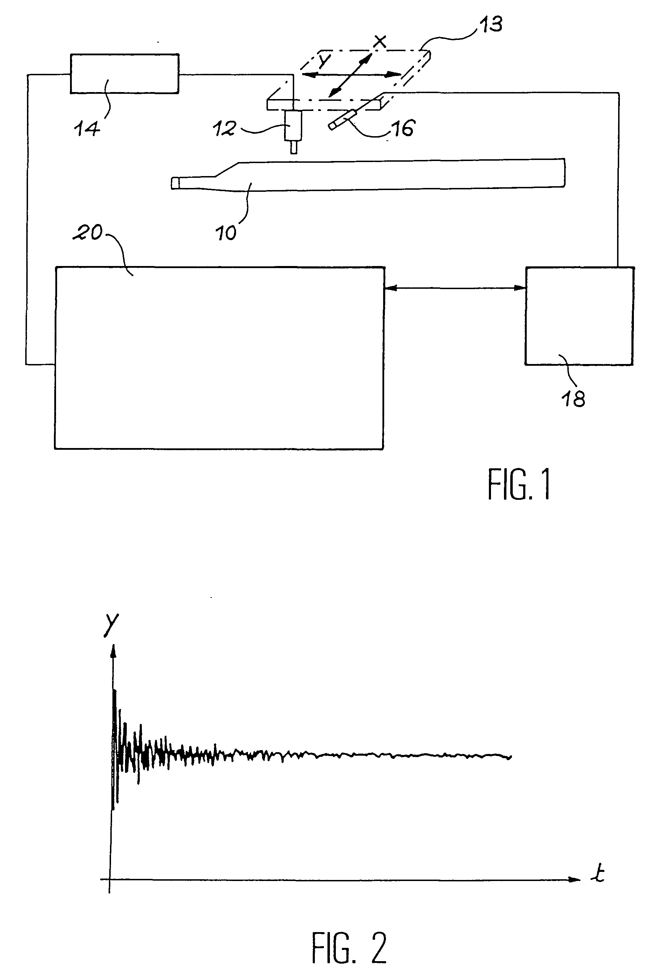

Sur la figure 1, la référence 10 désigne une pièce complexe, telle qu'une pale d'hélicoptère, sur laquelle un contrôle au son doit être effectué.

A cet effet, il est proposé conformément à l'invention un appareil automatisé permettant, d'une part, d'appliquer sur la pièce 10 des chocs successifs dont les impacts sont régulièrement répartis sur la surface à contrôler et, d'autre part, d'acquérir les signaux sonores représentatifs de la résonance acoustique engendrée par chaque choc, et de comparer entre eux au moins deux signaux sonores successifs, afin d'établir un diagnostic de défaut sur toute la surface à contrôler.

Les chocs sont appliqués sur la pièce par une tête d'impactage 12 montée sur un support 13 apte à se déplacer dans un plan sensiblement parallèle au plan moyen de la surface à contrôler, selon deux directions orthogonales X et Y.

La tête d'impactage comprend par exemple un marteau en acier maintenu par un solénoïde à l'encontre de l'action d'un ressort de compression. Le solénoïde est excité et désexcité de façon automatisée, à une fréquence régulée, de telle sorte que des chocs calibrés (selon la raideur du ressort) sont appliqués par le marteau sur la pièce, sous l'action du ressort, à chaque fois que le solénoïde est désexcité.

Chaque nouvelle excitation du solénoïde conduisant à une remontée du marteau est suivie d'un déplacement de la tête d'impactage 12 selon un pas et dans une direction déterminés. Les impacts des différents chocs sont ainsi régulièrement répartis à la surface de la pièce, par exemple selon un maillage carré fin dont le pas est, de préférence, réglable.

Il est à noter que la tête d'impactage peut être réalisée de toute autre manière. En particulier, la commande magnétique du marteau peut être remplacée par une commande hydraulique ou pneumatique.

La commande de l'actionnement de la tête d'impactage 12 ainsi que la commande synchronisée de ses déplacements sont assurées par un circuit de commande 14 qui peut notamment être conforme à celui qui est décrit dans le document FR-A-2 062 069.

L'appareil automatisé illustré schématiquement sur la figure 1 comprend, de plus, un microphone 16 qui recueille les signaux sonores représentatifs de la résonance acoustique engendrée par chaque choc. A cet effet, le microphone 16 est monté sur le même support 13 que la tête d'impactage 12, à proximité immédiate de celle-ci.

Le microphone 16 est associé à un circuit électronique 18 d'acquisition des signaux sonores. A la sortie de ce circuit électronique 18, et comme l'illustre la figure 2, chacun des signaux sonores bruts consiste en une courbe donnant les variations de l'amplitude y du signal, en fonction du temps t. Cette courbe est définie par une suite de $\underline{m}$ points, $\underline{m}$ étant un entier positif suffisamment grand pour fournir une image précise du signal concerné. Le nombre $\underline{m}$ de points définissant chaque signal sonore peut notamment être égal à 1024 dans la forme de réalisation décrite. Chacun des points de la suite de $\underline{m}$ points est défini par un instant $t_i$ et par une amplitude de signal $y_i$, i étant un entier variant de 1 à $\underline{m}$. La durée totale de chaque signal sonore, qui correspond à l'instant $t_m$ est, par exemple, de 20 ms.

Comme l'illustre très schématiquement la figure 1, chacun des signaux sonores délivrés par le circuit électronique 18 est transmis à un système 20 de pilotage et de gestion. Ce système 20 est constitué par un micro-ordinateur. Ses principales fonctions sont le pilotage de la séquence de contrôle et l'établissement de diagnostics conduisant à l'obtention d'une cartographie des défauts de la pièce contrôlée. De façon plus accessoire, le système 20 de pilotage et de gestion a aussi pour fonctions le réglage des paramètres d'acquisition (pas du maillage, fréquence d'impact, ....), la saisie des données propres à la pièce contrôlée (dimension de la surface à contrôler, ....) et l'archivage des données et des résultats.

Pour lui permettre de piloter la séquence de contrôle, le système 20 de pilotage et de gestion est relié au circuit de commande 14 de la tête d'impactage 12, ainsi qu'aux moyens (non représentés) permettant de commander les déplacements du support 13 portant la tête d'impactage 12 et le microphone 16.

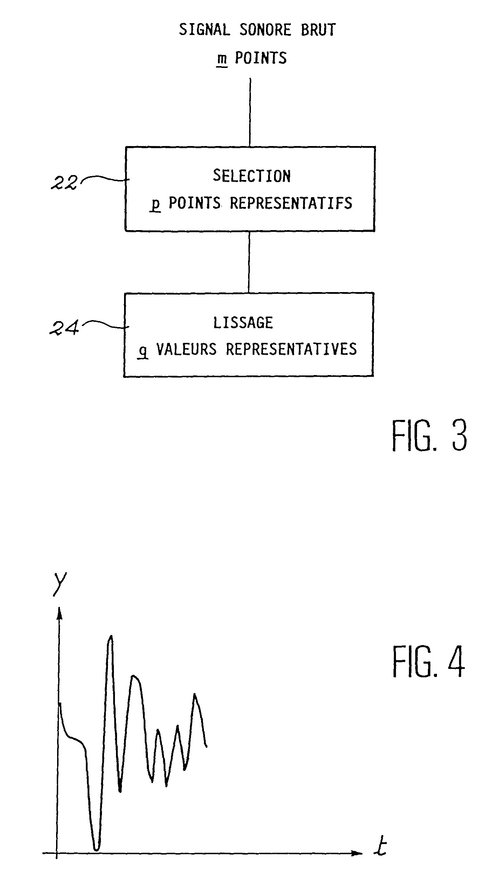

Afin d'établir un diagnostic quant à la présence ou à l'absence de défaut à chaque impact, le système 20 du pilotage et de gestion effectue, conformément à l'invention, une comparaison entre au moins deux signaux sonores successifs, qui peuvent être consécutifs ou non. Cette comparaison est effectuée au moyen d'un réseau de neurones. Etant donné que le nombre de points représentatifs de chaque signal sonore est beaucoup trop élevé pour pouvoir être appliqué directement sur un réseau de neurones, chaque signal sonore subit auparavant un prétraitement, tel qu'illustré schématiquement par le tableau synaptique de la figure 3.

La première étape du prétraitement consiste en une étape de sélection, parmi les $\underline{m}$ points de chaque signal sonore, de $\underline{p}$ points représentatifs de ce signal. Elle repose sur l'observation selon laquelle la première partie de chacun des signaux sonore contient, à elle seule, la majorité des informations nécessaires au diagnostic. En effet, la suite du signal apparaît comme des échos du premier pic de ce signal.

Cette étape de sélection, illustrée en 22 sur la figure 3, comprend une première phase de recalage en zéro, au cours de laquelle les premiers points, qui précèdent l'apparition du premier pic du signal, d'amplitude $\underline{y}$ très faible, correspondent à un bruit de fond.

Une deuxième phase de l'étape de sélection 22 consiste à ne conserver qu'un nombre $\underline{p}$ déterminé de points de la suite de $\underline{m}$ points, à partir de l'apparition du premier pic. Dans l'exemple décrit où chaque signal brut contient 1024 points, le nombre de points représentatifs conservés après cette étape de sélection peut être, par exemple, égal à 32.

Comme l'illustre également la figure 3, le prétraitement comprend une deuxième étape 24, au cours de laquelle on déduit des $\underline{p}$ points représentatifs de chaque signal sonore $\underline{q}$ valeurs représentatives. Ce nombre $\underline{q}$ de valeurs représentatives, inférieur au nombre $\underline{p}$ de points représentatifs, est suffisamment peu élevé pour pouvoir être appliqué sur un réseau de neurones, en même temps que les $q$ valeurs représentatives d'au moins un autre signal sonore. Dans le cas où les $\underline{q}$ valeurs représentatives de deux signaux sonores successifs sont appliqués sur un réseau de neurones, le nombre q de valeurs représentatives de chaque signal sonore, obtenu après la deuxième étape 24 du prétraitement, est égal, par exemple à 18.

Dans la forme de réalisation préférentielle décrite, la deuxième étape du prétraitement est une étape de lissage qui repose sur l'utilisation des polynômes de Tchebychev.

Pour une variable $\xi$ donnée, comprise dans l'intervalle [-1, 1], rappelons que le polynôme de Tchebychev d'ordre n, noté $Tc_n(\xi)$, se définit par la relation de récurrence :

$$Tc_n(\xi) = 2\,\xi\,Tc_{n-1}(\xi) - Tc_{n-2}(\xi),$$

avec

$$Tc_o(\xi) = 1$$

et

$$Tc_1(\xi) = \xi$$

Etant donné que chacun des p points représentatifs obtenus après l'étape de sélection 22 est déterminé par son amplitude $y_i$ et l'instant $t_i$ qui lui correspond, cet instant $t_i$ variant dans un intervalle de variation $\Delta t$ différent de l'intervalle [-1, 1] dans lequel sont définis les polynômes de Tchebychev, un changement de variable doit d'abord être effectué afin que ces polynômes puissent être utilisés.

Pour chacun des p points représentatifs d'un signal sonore donné, on transforme l'instant $t_i$ qui lui correspond en une nouvelle variable $\xi_i = (2 * t_i - \Delta t)/\Delta t$.

A ce stade, chaque point représentatif d'un signal sonore donné est donc défini par l'amplitude $y_i$ et par la variable $\xi_i$, représentative de l'instant correspondant à cette amplitude.

Sur cette nouvelle base, l'étape de lissage proprement dite est alors effectuée. Pour cela, on détermine par la méthode des moindres carrés, les valeurs des paramètres $a_n$ pour lesquelles l'expression S est minimale, cette expression S étant définie par la relation :

$$S = \sum_i \{ y_i - \sum_n a_n \, Tc_n \, (\xi_i) \}^2,$$

avec n variant de 0 à N

et N représentant le degré adopté pour le polynôme de Tchebychev.

Le degré N du polynôme de Tchebychev est choisi de façon à être suffisamment élevé pour approcher au mieux la courbe correspondant aux p points représentatifs et suffisamment faible pour que le nombre des paramètres $a_n$ soit minimal. En effet, les valeurs des paramètres $a_n$ sont les q valeurs représentatives recherchées, dont le nombre doit être suffisamment faible pour pouvoir être appliqué sur un réseau de neurones, en même temps que les valeurs représentatives d'au moins un autre signal.

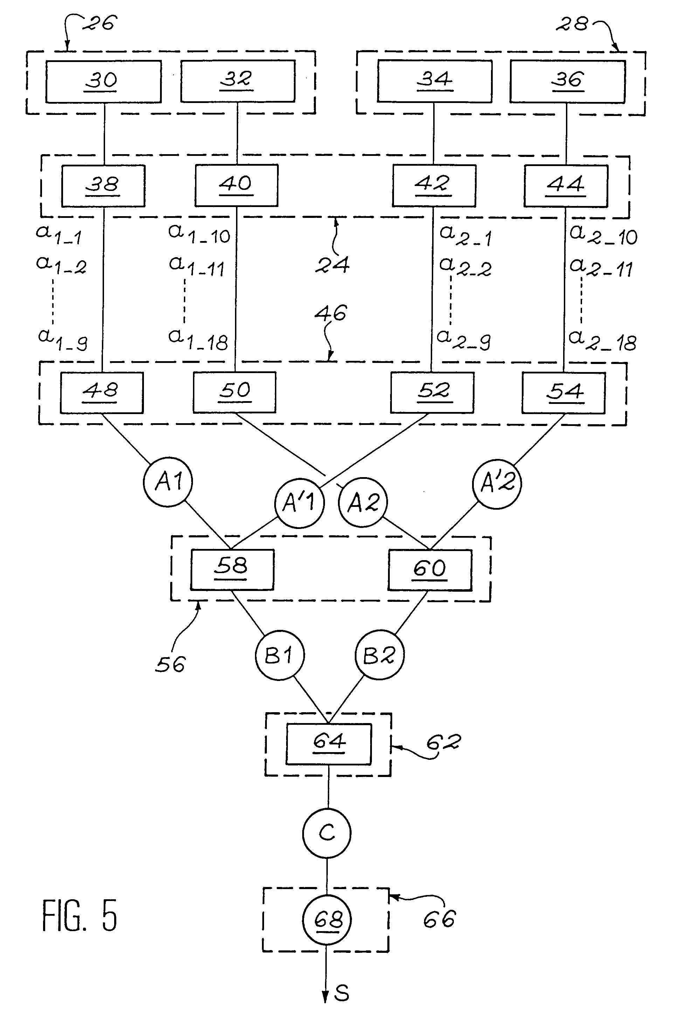

Pour faciliter le choix du degré N du polynôme de Tchebychev, compte tenu de cette dernière observation, l'étape de lissage 24 peut être effectuée séparément sur au moins deux groupes de points représentatifs d'un signal sonore donné. Ainsi, comme on l'a illustré dans le haut de la figure 5, dans le cas où les p points représentatifs sont divisés en deux groupes, chacun de ces groupes est formé respectivement par les p/2 premiers points représentatifs et par les p/2 derniers points représentatifs.

Plus précisément, la figure 5 représente le cas où le nombre x des signaux sonores que l'on compare est égal à 2. La référence 26 correspond aux p points représentatifs d'un premier signal S1 et la référence 28 correspond aux p points représentatifs d'un deuxième signal S2. Le nombre p des point représentatifs de chacun des signaux S1 et S2 peut notamment être égal à 32.

Comme on l'a indiqué plus haut, les p points représentatifs de chacun des signaux sonores S1 et S2 sont séparés en un premier groupe correspondant aux p/2 premiers points et en un deuxième groupe correspondant aux p/2 derniers points, afin de procéder à un lissage séparé de chacun de ces groupes. Sur la figure 5, les références 30 et 32 désignent respectivement le premier et le deuxième groupes de points représentatifs du premier signal sonore S1. De façon comparable, les références 34 et 36 désignent respectivement le premier et le deuxième groupes de points représentatifs du deuxième signal sonore S2. Dans l'exemple précité, chacun des groupes 30, 32, 34 et 36 comprend 16 points représentatifs.

Chacun de ces groupes 30, 32, 34 et 36 de points représentatifs fait l'objet d'une étape de lissage séparée, désignée respectivement par les références 38, 40, 42 et 44 sur la figure 5. A titre d'exemple, chacune de ces étapes de lissage séparée est effectuée à l'aide d'un polynôme de Tchebychev de degré 8. Le nombre des paramètres $a_n$ et, par conséquent, des q/2 valeurs représentatives obtenues à l'issue de chacune de ces quatre étapes de lissage séparées, est alors égal à 9.

Les 9 valeurs représentatives obtenues à l'issue de l'étape de lissage 38, à partir des 16 premiers points représentatifs du premier signal S1, sont désignées par les références $a_{1\text{-}1}$, $a_{1\text{-}2}$, ..., $a_{1\text{-}9}$. Les 9 valeurs représentatives obtenues à l'issue de l'étape de lissage 40, à partir des 16 derniers points représentatifs du premier signal S1, sont désignées par les références $a_{1\text{-}10}$, $a_{1\text{-}11}$, .., $a_{1\text{-}18}$. Les 9 valeurs représentatives obtenues à l'issue de l'étape de lissage 42, à partir des 16 premiers points représentatifs du deuxième signal S2, sont désignées par les références $a_{2\text{-}1}$, $a_{2\text{-}2}$, ..., $a_{2\text{-}9}$. Enfin, les 9 valeurs représentatives obtenues à l'issue de l'étape de lissage 44, à partir des 16 derniers points représentatifs du deuxième signal S2, sont désignées par $a_{2\text{-}10}$, $a_{2\text{-}11}$, ..., $a_{2\text{-}18}$.

Ces quatre groupes de 9 valeurs représentatives obtenus à l'issue des étapes de lissage 38, 40, 42 et 44 constituent les entrées d'un réseau de neurones, également représenté sur la figure 5. Ce réseau de neurones a pour fonction de comparer plusieurs signaux sonores successifs (deux dans l'exemple représenté), afin d'établir un diagnostic quant à la présence ou l'absence de défaut dans la région superficielle de la pièce dans laquelle les chocs correspondant à ces signaux sonores ont été appliqués.

Le réseau de neurones illustré sur la figure 5 est un réseau à quatre couches.

La couche d'entrée 46 de ce réseau de neurones comprend x*q neurones, x étant le nombre de signaux sonores que l'on compare (2 dans l'exemple considéré) et $\underline{q}$ étant le nombre de valeurs représentatives de chaque signal sonore obtenu après lissage (18 dans l'exemple considéré). Dans l'exemple considéré, la couche d'entrée comprend donc 36 neurones.

Sur la figure 5, la référence 48 désigne un premier bloc de 9 neurones appartenant à la couche d'entrée 46. Chacun de ces neurones reçoit l'une des 9 valeurs représentatives $a_{1-1}$, $a_{1-2}$, ..., $a_{1-9}$ de la première partie du premier signal S1. Chacun des 9 neurones d'un deuxième bloc 50 de la couche d'entrée reçoit l'une des 9 valeurs représentatives $a_{1-10}$, $a_{1-11}$, ..., $a_{1-18}$ de la deuxième partie du premier signal S1. La référence 52 désigne un troisième bloc de 9 neurones appartenant à la couche d'entrée, dont chacun reçoit l'une des 9 valeurs représentatives $a_{2-1}$, $a_{2-2}$, ..., $a_{2-9}$ de la première partie du deuxième signal S2. Enfin, la couche d'entrée 46 comprend aussi un quatrième bloc 54 de 9 neurones, dont chacun reçoit l'une des 9 valeurs représentatives $a_{2-10}$, $a_{2-11}$, ..., $a_{2-18}$ de la deuxième partie du deuxième signal S2.

La deuxième couche, ou première couche cachée 56, du réseau de neurones illustré à titre d'exemple sur la figure 5, comprend deux blocs de 9 neurones chacun, désignés respectivement par les références 58 et 60.

La troisième couche, ou deuxième couche cachée 62, du réseau de neurones, comprend un bloc 64 de 5 neurones, dans l'exemple décrit.

Enfin, la quatrième couche, ou couche de sortie 66, du réseau de neurones illustré à titre d'exemple sur la figure 5, comprend un seul neurone 68 dont la sortie délivre un signal de diagnostic S. Ce signal de diagnostic S, qui varie par exemple entre -1 et +1, permet de conclure soit à une présence de défaut lorsque les signaux sonores comparés sont estimés différents par le réseau, soit à une absence de défaut lorsque le réseau conclut à la quasi-identité de ces signaux sonores.

Les 9 neurones du bloc 58 de la première couche cachée 56 sont connectés aux 9 neurones des blocs 48 et 52 de la couche d'entrée du réseau. Les sorties des neurones du bloc 58 sont donc représentatives de la première partie de chacun des signaux sonores S1 et S2 que l'on compare.

De façon analogue, les 9 neurones du bloc 60 de la première couche cachée 56 sont connectés aux 9 neurones des blocs 50 et 54 de la couche d'entrée du réseau. Les sorties des neurones du bloc 60 sont donc représentatives de la deuxème partie de chacun des deux signaux sonores S1 et S2 comparés par le réseau.

Les 5 neurones du bloc 64 formant la deuxième couche cachée 64 sont connectés aux 9 neurones de chacun des blocs 58 et 60 de la première couche cachée 56. Les sorties de ces 5 neurones sont donc représentatives de la totalité des signaux sonores S1 et S2 que l'on compare.

Enfin, le neurone 68 formant la couche de sortie 66 du réseau est connecté à chacun des 5 neurones du bloc 64 formant la deuxième couche cachée 62.

Sur la figure 5, on a représenté respectivement par une connexion générique unique A1, A'1, A2, A'2, B1, B2 et C l'ensemble des connexions entre les neurones des blocs 48 et 58, 52 et 58, 50 et 60, 54 et 60, 58 et 64, 60 et 64, et 64 et 68.

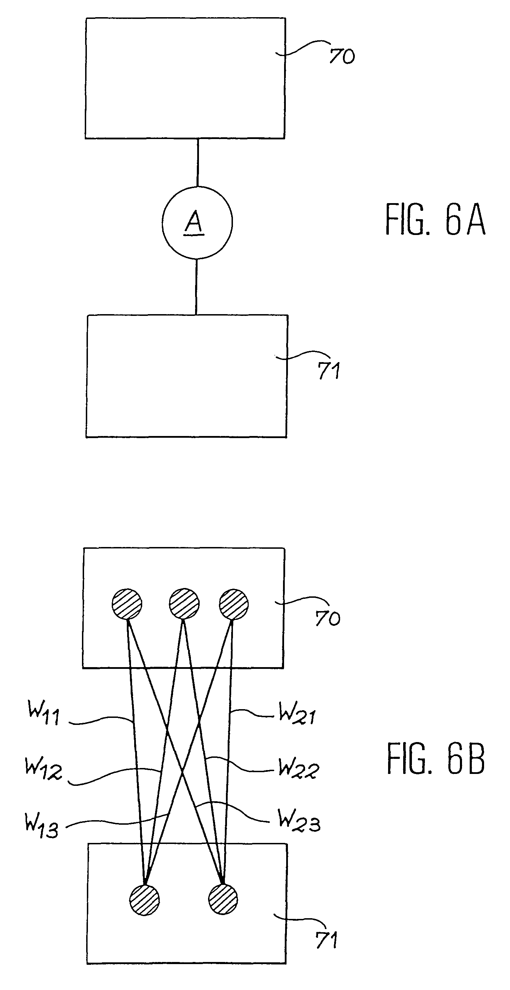

En d'autres termes et comme l'illustrent les figures 6A et 6B, chacune des connexions génériques A1, A'1, A2, A'2, B1, B2 et C correspond en réalité à un ensemble de connexions entre les modules des blocs concernés par ces connexions génériques.

Ainsi, la figure 6A représente sous la forme d'une connexion générique A l'ensemble des connexions illustrées sur la figure 6B entre un groupe 70 comprenant 3 neurones et un groupe 71 comprenant deux neurones. Les valeurs Wi sont les poids synaptiques affectés à chacune des connexions de la figure 6B. Chaque connexion générique, telle que les connexions A1, A'1, A2, A'2, B1, B2 et C sur la figure 5 signifie donc que tous les neurones du premier bloc sont connectés à tous les neurones du second bloc.

Dans le réseau de neurones dont l'architecture vient d'être décrite en se référant à la figure 5, chacun des poids synaptiques qui sont affectés aux différentes connexions symbolisées par les connexions génériques A1, A'1, A2, A'2, B1, B2 et C, est déterminé une fois pour toutes, avant l'exploitation du réseau. Cette détermination est faite par itération à l'aide d'un algorithme de rétropropagation, sur la base d'un premier jeu d'exemples dont on connaît les entrées, ainsi que les diagnostics de sortie attendus. Les poids synaptiques ainsi déterminés sont ensuite validés à l'aide d'un deuxième jeu d'exemples. Le nombre d'exemples de chaque jeu, est aussi élevé que possible, par exemple compris entre 1000 et 1500.

Les tests de validation ont montré que le pourcentage d'exactitude du diagnostic fourni par le réseau de neurones est d'environ 95 %. Ce pourcentage est largement satisfaisant lorsqu'il est rapporté à la détection d'une zone superficielle défectueuse d'une pièce. En effet, il permet de localiser la frontière des défauts avec une bonne précision.

Avantageusement, les signaux de diagnostic S délivrés par le réseau de neurones sont visualisés sous forme de cartographie sur une interface graphique du système 20 de pilotage et de gestion (figure 1).

L'architecture du réseau de neurones décrite précédemment en se référant à la figure 5, basée sur une approche globale du problème ne constitue qu'un exemple.

Grâce au procédé de contrôle selon l'invention, il devient donc possible d'effectuer un contrôle au son automatisé de pièces complexes, de façon fiable et reproductible. De plus, la durée et le coût du contrôle peuvent être réduits par rapport aux contrôles actuels et les résultats visualisés de façon claire et accessible.

**Revendications**

1. Procédé de contrôle au son de pièces complexes, selon lequel on soumet la pièce (10) à des chocs successifs selon des impacts répartis sur une surface à contrôler de la piece, on recueille des signaux sonores engendrés par chaque choc et on déduit de la réponse acoustique engendrée par ces chocs un diagnostic relatif à la présence de défauts peu profonds, **caractérisé par le fait qu'**on compare entre eux au moins deux signaux sonores successifs émis par la pièce à contrôler, pour en déduire de façon automatisée un diagnostic de défauts lorsqu'une différence notable est détectée entre ces signaux sonores successifs.

2. Procédé selon la revendication 1, **caractérisé par le fait qu'**on applique sur la pièce (10) des chocs successifs calibrés, à une fréquence régulée et de façon automatisée, selon des impacts régulièrement répartis sur la surface à contrôler.

3. Procédé selon l'une quelconque des revendications 1 et 2, **caractérisé par le fait qu'**on compare entre eux des signaux sonores consécutifs engendrés par des chocs d'impacts adjacents.

4. Procédé selon l'une quelconque des revendications 1 et 2, **caractérisé par le fait qu'**on compare entre eux des signaux sonores non consécutifs, engendrés par des chocs d'impacts séparés par au moins un impact intermédiaire.

5. Procédé selon l'une quelconque des revendications précédentes, **caractérisé par le fait qu'**on compare entre eux les signaux sonores successifs et qu'on en déduit un diagnostic de façon automatique, à l'aide d'un réseau de neurones.

6. Procédé selon la revendication 5, **caractérisé par le fait qu'**on effectue un prétraitement sur chacun des signaux sonores, pour dériver de ce dernier $q$ valeurs représentatives, $q$ étant un entier positif, et qu'on utilise les $q$ valeurs représentatives d'au moins deux signaux sonores successifs comme grandeurs d'entrée du réseau de neurones.

7. Procédé selon la revendication 6, **caractérisé par le fait que**, chacun des signaux sonores consistant en une suite de $m$ points déterminés chacun par un instant $t_i$ et par une amplitude de signal $y_i$, le prétraitement comprend une étape de sélection, parmi la suite de $m$ points de $p$ points représentatifs, et une étape de lissage, au cours de laquelle les $q$ valeurs représentatives sont déduites des $p$ points représentatifs, $m$ et $p$ étant des entiers tels que $m > p > q$.

8. Procédé selon la revendication 7, **caractérisé par le fait que** l'étape de sélection consiste à éliminer les points de la suite de $m$ points qui précèdent l'apparition d'un premier pic du signal sonore, et à ne conserver qu'un nombre $p$ déterminé de points de la suite de $m$ points, à partir de ce premier pic.

9. Procédé selon l'une quelconque des revendications 7 et 8, **caractérisé par le fait que** l'étape de lissage consiste à transformer les instants $t_i$ de chacun des $p$ points représentatifs en variables $\xi_i$ telles que $\xi_i = (2 * t_i - \Delta t)/\Delta t$, où $\Delta t$ représente l'intervalle des variations des instants $t_i$, puis à déterminer, par la méthode des moindres carrés, les valeurs des paramètres $a_n$ pour lesquelles l'expression

$$S = \sum_i \{y_i - \sum_n a_n \ Tc_n \ (\xi_i)\}^2$$

est minimale, avec $n$ variant de O à N, $Tc_n \ (\xi_i)$ étant le polynôme de Tchebychev de degré N, ces valeurs des paramètres $a_n$ étant les $q$ valeurs représentatives recherchées.

10. Procédé selon l'une quelconque des revendications 6 à 9, **caractérisé par le fait qu'**on utilise un réseau de neurones à quatre couches, incluant une couche d'entrée (46) à $x * q$ neurones, x étant le nombre de signaux sonores successifs que l'on compare, au moins deux couches cachées (56, 62) et une couche de sortie (66) à un seul neurone (68).

**11.** Procédé selon la revendication 10, **caractérisé par le fait que** :

- la première couche cachée (56) comprend un nombre pair de neurones, égal à la moitié du nombre de neurones de la couche d'entrée (46), les neurones de la première couche cachée (56) étant réparties en nombre égal dans un premier (58) et un deuxième (60) groupes de neurones ;
- tous les neurones du premier groupe (58) sont connectés à tous les neurones de $\underline{x}$ groupes (48, 52) de neurones de la couche d'entrée (46) recevant chacun une première moitié des $\underline{q}$ valeurs représentatives de l'un des signaux sonores (S1, S2) comparés ;
- tous les neurones du deuxième groupe (60) sont connectés à tous les neurones de $\underline{x}$ groupes (50, 54) de neurones de la couche d'entrée (46) recevant chacun une deuxième moitié des $\underline{q}$ valeurs représentatives de l'un des signaux sonores comparés.

**12.** Procédé selon l'une quelconque des revendications 10 et 11, **caractérisé par le fait que** :

- la deuxième couche cachée (62) comprend un nombre de neurones supérieur à un et inférieur à la moitié du nombre de neurones de la première couche cachée (56) ;
- tous les neurones de la deuxième couche cachée (62) sont connectés à tous les neurones de la première couche cachée (56).

## Claims

**1.** Process for tapping complex parts, according to which the part (10) is subject to successive shocks based on impacts distributed over a surface to be tested of the part, the sound signals produced by each shock are collected and from the acoustic response produced by these shocks is deduced a diagnosis relative to the presence of shallow faults, **characterized in that** at least two successive sound signals emitted by the part to be controlled are compared with one another in order to deduce therefrom in automated manner a fault diagnosis when a significant difference is detected between these successive sound signals.

**2.** Process according to claim 1, **characterized in that** calibrated, successive shocks are applied to the part (10) at a regulated frequency and in an automated manner, on the basis of impacts regularly distributed over the surface to be tested.

**3.** Process according to either of the claims 1 and 2, **characterized in that** consecutive sound signals produced by the shocks of adjacent impacts are compared.

**4.** Process according to either of the claims 1 and 2, **characterized in that** non-consecutive sound signals produced by shocks of impacts separated by at least one intermediate impact are compared.

**5.** Process according to any one of the preceding claims, **characterized in that** successive sound signals are compared and deduction takes place therefrom in automatic manner of a diagnosis with the aid of a neuron network.

**6.** Process according to claim 5, **characterized in that** a preprocessing takes place on each of the sound signals in order to derive from the latter q representative values, q being a positive integer and the q representative values of at least two successive sound signals are used as input quantities of the neuron network.

**7.** Process according to claim 6, **characterized in that** each of the sound signals consists of a sequence of m points, each determined by a time ti and by an amplitude of the signal yi, so that the preprocessing consists of a selection stage from among the sequence of m points and p representative points, as well as a smoothing stage, during which the q representative values are deduced from the p representative points, m and p being integers such that m > p > q.

**8.** Process according to claim 7, **characterized in that** the selection stage consists of eliminating the points of the sequence of m points preceding the appearance of a first peak of the sound signal and of only retaining a given number p of points of the sequence of m points as from said first peak.

**9.** Process according to either of the claims 7 and 8, **characterized in that** the smoothing stage consists of transforming the times ti of each of the p representative points into variables $\xi i$ such that $\xi i = (2 * ti - \Delta t)/\Delta t$, in which $\Delta t$

represents the interval of the variations of the times ti, followed by the determination using the method of least squares of the values of the parameters an for which the expression

$$S = \Sigma \{y_i - \sum_n a_n T_{cn} (\xi_i)\}^2$$

is minimal, with n varying from 0 to N, Tcn (ξi) being the degree N Chebyshev's polynomial, said values of parameters an being the q sought representative values.

10. Process according to any one of the claims 6 to 9, **characterized in that** use is made of a four layer neuron network, including an input layer (46) with x * q neurons, x being the number of successive sound signals compared, at least two hidden layers (56, 62) and an output layer (66) having a single neuron (68).

11. Process according to claim 10, **characterized in that** the first hidden layer (56) has an even number of neurons, equal to half the number of neurons of the input layer (46), the neurons of the first hidden layer (56) being distributed in equal numbers in a first (58) and a second (60) group of neurons, all the neurons of the first group (58) are connected to all the neurons of the x groups (48, 52) of neurons of the input layer (46), each receiving a first half of the q representative values of one of the compared sound signals (51, 52) and all the neurons of the second group (60) are connected to all the neurons of x groups (50, 54) of neurons of the input layer (46), each receiving a second half of the q representative values of one of the compared sound signals.

12. Process according to either of the claims 10 and 11, **characterized in that** the second hidden layer (62) has a number of neurons exceeding 1 and lower than half the number of neurons of the first hidden layer (56) and all the neurons of the second hidden layer (62) are connected to all the neurons of the first hidden layer (56).

**Patentansprüche**

1. Schall-Kontrollverfahren komplexer Teile, gemäß dem das Teil (10) anhand von über eine zu kontrollierende Oberfläche des Teils verteilten Stößen sukzessiver Schocks ausgesetzt wird, die von jedem Schock erzeugten Schallsignale erfasst werden und eine Diagnose hinsichtlich des Vorhandenseins von Defekten geringer Tiefe von dem durch die Schocks erzeugten akustischen Ansprechverhalten abgeleitet wird,
   **dadurch gekennzeichnet, daß** mindestens zwei von dem zu kontrollierenden Teil emittierte, aufeinanderfolgende Schallsignale miteinander verglichen werden, um daraus, wenn ein merklicher Unterschied zwischen sukzessiven Schallsignalen detektiert wird, auf automatisierte Art und Weise eine Diagnose der Defekte abzuleiten.

2. Verfahren gemäß Anspruch 1, **dadurch gekennzeichnet, daß** man auf das Teil (10) anhand von über die zu kontrollierende Oberfläche regelmäßig verteilten Stößen sukzessive genau bemessene Schocks mit geregelter Frequenz und auf automatische Art und Weise einwirken läßt.

3. Verfahren gemäß Anspruch 1 oder 2, **dadurch gekennzeichnet, daß** durch Schocks von aufeinanderfolgenden Stößen erzeugte, unmittelbar aufeinanderfolgende Schallsignale untereinander verglichen werden.

4. Verfahren gemäß Anspruch 1 oder 2, **dadurch gekennzeichnet, daß** durch Schocks von mindestens durch einen Zwischenstoß voneinander getrennten Stößen erzeugte, nicht unmittelbar aufeinanderfolgende Schallsignale untereinander verglichen werden.

5. Verfahren gemäß einem der vorangehenden Ansprüche, **dadurch gekennzeichnet, daß** die aufeinanderfolgenden Schallsignale untereinander verglichen werden und daraus auf automatische Weise mittels eines Neuronennetzes eine Diagnose abgeleitet wird.

6. Verfahren gemäß Anspruch 5, **dadurch gekennzeichnet, daß** jedes der Schallsignale einer Vorbehandlung unterzogen wird, um daraus q Repräsentativwerte abzuleiten, wobei q eine positive ganze Zahl ist und die q Repräsentativwerte von mindestens zwei aufeinanderfolgenden Schallsignalen als Eingangsgröße des Neuronennetzes verwendet werden.

7. Verfahren gemäß Anspruch 6, **dadurch gekennzeichnet, daß**

**10**

- während jedes der Schallsignale aus einer Abfolge von $\underline{m}$ Punkten besteht, die jeweils durch einen Zeitpunkt $t_i$ und durch eine Signalamplitude $y_i$ bestimmt sind - die Vorbehandlung einen Schritt der Auswahl von $\underline{p}$ repräsentativen Punkten aus der Abfolge von $\underline{m}$ Punkten und einen Schritt des Glättens, bei dem die $\underline{q}$ Repräsentativwerte von den $\underline{p}$ repräsentativen Punkten abgeleitet werden, umfaßt, wobei $\underline{m}$ und $\underline{p}$ ganze Zahlen sind und m > p > q ist.

8. Verfahren gemäß Anspruch 7, **dadurch gekennzeichnet, daß** der Auswahlschritt darin besteht, die Punkte der Abfolge von $\underline{m}$ Punkten, die dem Auftreten des ersten Peaks des Schallsignals vorausgehen, zu eliminieren, und nur eine bestimmte Zahl $\underline{p}$ von Punkten der Abfolge von Punkten $\underline{m}$ nach diesem ersten Peak beizubehalten.

9. Verfahren gemäß einem der Ansprüche 7 oder 8, **dadurch gekennzeichnet, daß** der Glättungsschritt darin besteht, die Zeitpunkte $t_i$ jedes der repräsentativen Punkte $\underline{p}$ in Variable $\xi_i$ derart umzuwandeln, daß $\xi_i = (2 * t_i - \Delta t)$, wobei $\Delta t$ das Intervall der Variationen der Zeitpunkte $t_i$ darstellt, und dann durch die Methode der kleinsten Quadrate die Werte der Parameter $a_n$ zu bestimmen, für die der Ausdruck

$$ S = \sum_i \{ y_i - \sum_n a_n \ Tc_n \ (\xi_i) \}^2 $$

minimal ist, wobei $\underline{n}$ zwischen O und N variiert, $Tc_n (\xi_i)$ das Tchebychev'sche Polynom N-ten Grades ist, und diese Werte der Parameter $a_n$ die gesuchten $\underline{q}$ Repräsentativwerte sind.

10. Verfahren gemäß einem der Ansprüche 6 bis 9, **dadurch gekennzeichnet, daß** ein Neuronennetz mit vier Schichten verwendet wird, das eine Eingangsschicht (46) mit x * q Neuronen, wobei x die Anzahl der verglichenen sukzessiven Schallsignale ist, sowie mindestens zwei versteckte Schichten (56,62) und eine Ausgangsschicht (66) mit einem einzigen Neuron (68) umfaßt.

11. Verfahren gemäß Anspruch 10, **dadurch gekennzeichnet, daß**:

- die erste versteckte Schicht (56) eine gerade Zahl von Neuronen umfaßt, die gleich der Hälfte der Neuronenzahl der Eingangsschicht (46) ist, wobei die Neuronen der ersten versteckten Schicht (56) in gleicher Zahl auf eine erste (58) und eine zweite (60) Neuronengruppe verteilt sind,
- alle Neuronen der ersten Gruppe (58) mit allen Neuronen von $\underline{x}$ Neuronengruppen (48,52) der Eingangsschicht (46) verbunden sind, von denen jede eine erste Hälfte der $\underline{q}$ Repräsentativwerte von einem der verglichenen Schallsignale (S1, S2) empfängt,
- alle Neuronen der zweiten Gruppe (60) mit allen Neuronen von $\underline{x}$ Neuronengruppen (50,54) der Eingangsschicht (46) verbunden sind, von denen jede eine zweite Hälfte der $\underline{q}$ Repräsentativwerte von einem der verglichenen Schallsignale empfängt.

12. Verfahren gemäß einem der Ansprüche 10 oder 11, **dadurch gekennzeichnet, daß**:

- die zweite versteckte Schicht (62) eine Neuronenzahl aufweist, die größer als eins und kleiner als die Hälfte der Neuronenzahl der ersten versteckten Schicht (56) ist,
- alle Neuronen der zweiten versteckten Schicht (62) mit allen Neuronen der ersten versteckten Schicht (56) verbunden sind.

FIG. 1

FIG. 2

SIGNAL SONORE BRUT

m POINTS

22 ⟶ ┌─────────────────────────────┐
│       SELECTION             │
│  p POINTS REPRESENTATIFS    │
└─────────────────────────────┘

24 ⟶ ┌─────────────────────────────┐
│       LISSAGE               │
│  q VALEURS REPRESENTATIVES  │
└─────────────────────────────┘

FIG. 3

FIG. 4

FIG. 5

FIG. 6A

FIG. 6B